# EUROPEAN PATENT APPLICATION

(11) **EP 4 443 562 A1**
(43) Date of publication of application: **09.10.2024**
(21) Application number: 22900968.3
(22) Date of filing: 24.10.2022
(51) Int. Cl.: H01M 4/525, H01M 4/36

(54) **POSITIVE ELECTRODE ACTIVE MATERIAL FOR NON-AQUEOUS ELECTROLYTE SECONDARY BATTERY, POSITIVE ELECTRODE FOR NON-AQUEOUS ELECTROLYTE SECONDARY BATTERY, NON-AQUEOUS ELECTROLYTE SECONDARY BATTERY, AND METHOD FOR MANUFACTURING POSITIVE ELECTRODE ACTIVE MATERIAL FOR NON-AQUEOUS ELECTROLYTE SECONDARY BATTERY**

(30) Priority: 30.11.2021 JP 2021194937
(71) Applicant: Panasonic Intellectual Property Management Co., Ltd., Osaka-shi, Osaka 540-6207 (JP)
(72) Inventor: KAWAKITA Akihiro, Kadoma-shi, Osaka 571-0057 (JP); DEGUCHI Masaki, Kadoma-shi, Osaka 571-0057 (JP); INOUE Katsuya, Kadoma-shi, Osaka 571-0057 (JP); OGASAWARA Takeshi, Kadoma-shi, Osaka 571-0057 (JP)
(74) Representative: Novagraaf International SA
(86) International application number: PCT/JP2022/039562
(87) International publication number: WO 2023/100535

(57) **Abstract**

Provided is a positive electrode active material having a high capacity and improved output characteristics. The positive electrode active material included in this non-aqueous electrolyte secondary battery includes a lithium-containing complex oxide having a layered rock salt structure, and a sulfonic acid compound that is present on the surface of the lithium-containing complex oxide. The lithium-containing complex oxide contains 80 mol% or more of Ni, 1.5 mol% or more of Co, and 4 mol% or more of Al based on the total molar number of metal elements excluding Li. The sulfonic acid compound is represented by the general formula I. (In the formula, A is a Group 1 element or a Group 2 element, R is a hydrocarbon group, and n is 1 or 2.)

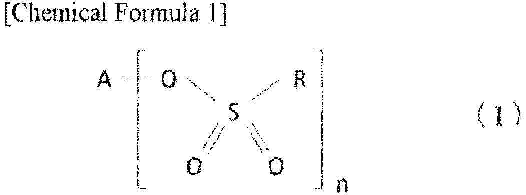

## Description

### TECHNICAL FIELD

The present disclosure relates to a positive electrode active material for a non-aqueous electrolyte secondary battery, a positive electrode for a non-aqueous electrolyte secondary battery, a non-aqueous electrolyte secondary battery, and a method of manufacturing a positive electrode active material for a non-aqueous electrolyte secondary battery.

### BACKGROUND ART

In recent years, non-aqueous electrolyte secondary batteries have been in wider use, including as power sources for electric vehicles and power storage devices for active use of natural energy. Properties required for positive electrode active materials used in non-aqueous electrolyte secondary batteries would vary in accordance with their use. Patent Document 1, for example, discloses a positive electrode active material including lithium titanate having a surface to which a lithium sulfonate salt compound is attached. Patent Document 1 discloses that this positive electrode active material has an excellent high-temperature storage characteristics.

### CITATION LIST

### PATENT LITERATURE

PATENT LITERATURE 1: Japanese Unexamined Patent Application Publication No. 2018-006164

### SUMMARY

### TECHNICAL PROBLEM

Typically, an NCA-based lithium-containing composite oxide containing Ni, Co, and Al is known as a high-capacity positive electrode active material. However, secondary batteries including an NCA-based lithium-containing composite oxide may suffer from lowering of discharge capacity at a high rate. The technology disclosed in Patent Document 1 takes no consideration of achieving both high capacity and improved output characteristics and is therefore susceptible to improvement.

The present disclosure is aimed toward providing a positive electrode active material having high capacity and improved output characteristics.

### SOLUTION TO PROBLEM

In accordance with an aspect of the present disclosure, a positive electrode active material for non-aqueous electrolyte secondary battery, includes a lithium-containing composite oxide having a layered rock salt structure, and a sulfonic acid compound present on a surface of the lithium-containing composite oxide. The lithium-containing composite oxide contains 80 mol% or more of Ni, 1.5 mol% or more of Co, and 4 mol% or more of Al, relative to a total number of moles of metal elements other than Li. The sulfonic acid compound is represented by general formula I: 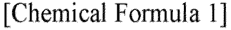 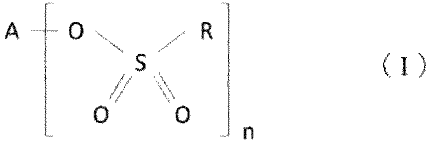 (where A is a Group 1 element or a Group 2 element, R is a hydrocarbon group, and n is 1 or 2).

In accordance with an aspect of the disclosure, a method for manufacturing a positive electrode active material for non-aqueous electrolyte secondary battery, includes: a synthesis process of mixing a metal oxide containing 80 mol% or more of Ni, 1.5 mol% of Co, and 4 mol% or more of Al, with a Li compound and calcining a mixture to obtain a lithium-containing composite oxide; a washing process of washing, with water, and dehydrating the lithium-containing composite oxide to obtain a cake-like composition; a drying process of drying the cake-like composition to obtain a powdery composition; and an adding process of adding at least one of a sulfonic acid compound and a sulfonic acid solution to the cake-like composition or the powdery composition.

In accordance with an aspect of the disclosure, a positive electrode for a non-aqueous electrolyte secondary battery includes the above-described positive electrode active material.

In accordance with an aspect of the disclosure, a non-aqueous electrolyte secondary battery includes the above-described positive electrode, a negative electrode, and a non-aqueous electrolyte.

### ADVANTAGEOUS EFFECTS OF INVENTION

The positive electrode active material for a non-aqueous electrolyte secondary battery according to one aspect of the disclosure provides a non-aqueous electrolyte secondary battery having a high capacity and improved output characteristics.

### BRIEF DESCRIPTION OF DRAWINGS

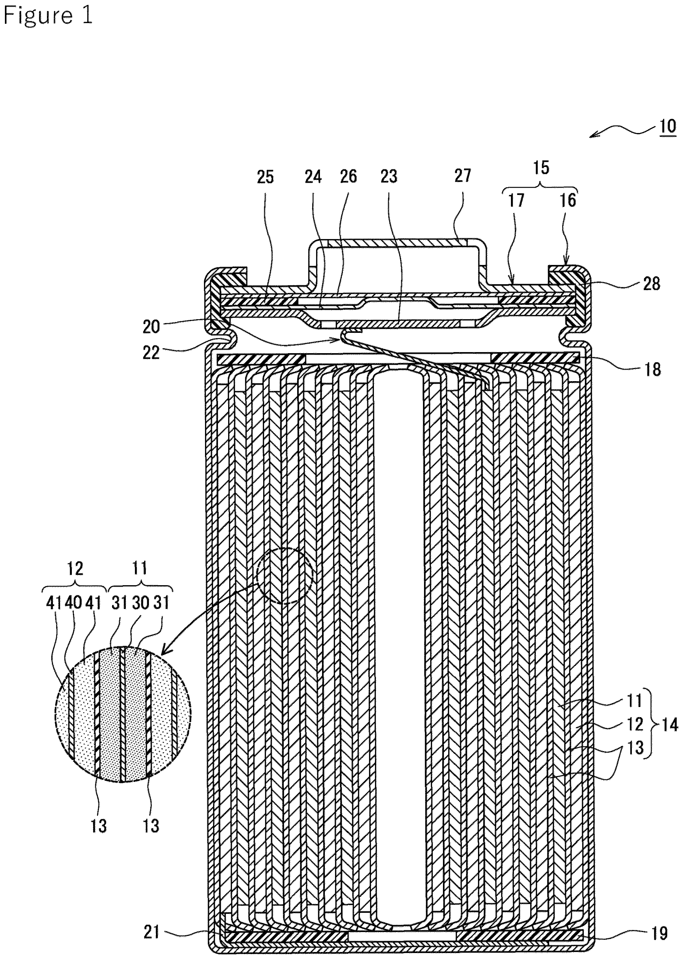

[FIG. 1] FIG. 1 a vertical cross sectional view of a non-aqueous electrolyte secondary battery according to an example embodiment.

### DESCRIPTION OF EMBODIMENTS

A layered rock salt structure of a lithium-containing composite oxide includes a transition metal layer such as Ni, a Li layer, and an oxygen layer, and Li ions contained in the Li layer reversibly move in and out to proceed charging and discharging reaction of a battery. An NCA-based lithium-containing composite oxide is typically known as a high-capacity positive electrode active material. The NCA-based lithium-containing composite oxide, which contains 80 mol% or more of Ni relative to the total number of moles of metal elements excluding Li, achieves higher capacity. The NCA-based lithium-containing composite oxide, which contains 1.5 mol% or more of Co relative to the total number of moles of metal elements excluding Li, improves heat resistance. The NCA-based lithium-containing composite oxide, which contains 4 mol% or more of Al relative to the total number of moles of metal elements excluding Li, stabilizes the layered rock salt structure of the lithium-containing composite oxide. Secondary batteries including such a lithium-containing composite oxide, however, may suffer from lowering of the discharge capacity at high rates.

The present inventors, after diligent studies for solving the above problem, have found that a sulfonic acid compound represented by general formula I, when attached to a surface of a lithium-containing composite oxide, achieves improved output characteristics. 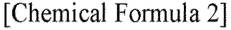 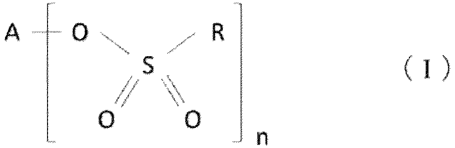 (where A is a Group 1 element or a Group 2 element, R is hydrocarbon group, and n is 1 or 2.)

A non-aqueous electrolyte secondary battery according to an example embodiment of the disclosure will be described in detail below. While the following example describes a cylindrical battery storing a wound electrode assembly in a cylindrical outer housing, the electrode assembly is not limited to a wound type and may be of a stacked type including a plurality of positive electrodes and a plurality of negative electrodes alternately stacked one by one with a separator being disposed between the pair of positive and negative electrodes. Further, the outer housing may have a shape other than a cylindrical shape, such as a rectangular shape or coin shape, or may be a battery casing made of laminated sheet including a metal layer and a resin layer.

FIG. 1 is a vertical cross sectional view of a non-aqueous electrolyte secondary battery 10 according to an example embodiment. As illustrated in FIG. 1, the non-aqueous electrolyte secondary battery 10 includes an electrode assembly 14, a non-aqueous electrolyte (not shown), and a battery casing 15 that houses the electrode assembly 14 and the non-aqueous electrolyte. The electrode assembly 14 has a wound configuration including a positive electrode 11 and a negative electrode 12 wounded with a separator 13 disposed between the positive electrode 11 and the negative electrode 12. The battery casing 15 includes a cylindrical exterior can 16 having a bottom, and a sealing assembly 17 that closes an opening of the exterior can 16.

The electrode assembly 14 is composed of the positive electrodes 11 in a strip shape, the negative electrodes 12 in a strip shape, two strip-shape separators 13, and positive electrode tab 20 joined to the positive electrode 11, and a negative electrode tab 21 joined to the negative electrode 12. To prevent precipitation of lithium, the negative electrode 12 is slightly larger than the positive electrode 11. Specifically, the negative electrode 12 is longer than the positive electrode 11 both in the longitudinal and width (lateral) directions. The two separators 13 are slightly larger than at least the positive electrode 11, and are disposed to sandwich the positive electrode 11, for example.

The non-aqueous electrolyte secondary battery 10 includes insulating plates 18 and 19 disposed on top and bottom of the electrode assembly 14, respectively. In the example illustrated in FIG. 1, the positive electrode tab 20 attached to the positive electrode 11 extends through a through hole in the insulating plate 18 toward the sealing assembly 17, and the negative electrode tab 21 attached to the negative electrode 12 extends outside the insulating plate 19 toward the bottom of the exterior can 16. The positive electrode tab 20 is connected to a lower face of a bottom plate 23 of the sealing assembly 17 by welding, for example, and a cap 27 of the sealing assembly 17 electrically connected with the bottom plate 23 serves as a positive electrode terminal. The negative electrode tab 21 is connected to an inner face of the bottom portion of the exterior can 16 by welding, for example, and the exterior can 16 serves as a negative electrode terminal.

The exterior can 16 is a cylindrical metal container having a bottom, for example. A gasket 28 is disposed between the exterior can 16 and the sealing assembly 17 to seal the internal space of the battery casing 15. The exterior can 16 includes a groove portion 22 that is formed by externally pressing the side face, for example, to support the sealing assembly 17. The groove portion 22 is preferably formed annularly along the circumference of the exterior can 16 to support the sealing assembly 17 on the top face of the groove portion 22.

The sealing assembly 17 has a configuration in which the bottom plate 23, a lower valve element 24, an insulating member 25, an upper valve element 26, and the cap 27 are stacked in sequence from the side closer to the electrode assembly 14. The components of the sealing assembly 17 have, for example, either a disc shape or a ring shape, and are, except for the insulating member 25, electrically connected to each other. The lower valve element 24 and the upper valve element 26 are connected to each other at their center portions, and the insulating member 25 is interposed between their peripheral portions. In response to an increase in the internal pressure of the battery due to abnormal heat generation, the lower valve element 24 deforms so as to push the upper valve element 26 toward the cap 27 and breaks, thereby interrupting the current path between the lower valve element 24 and the upper valve element 26. In response to a further increase in the internal pressure, the upper valve element 26 breaks, letting gas escape through an opening of the cap 27.

The positive electrode 11, the negative electrode 12, the separators 13, and the non-aqueous electrolyte, which constitute the non-aqueous electrolyte secondary battery 10, will be described below. In particular, a positive electrode active material contained in a positive electrode mixture layer 31 that constitutes the positive electrodes 11 will be described in detail.

### [Positive Electrode]

The positive electrode 11 includes a positive electrode current collector 30 and a positive electrode mixture layer 31 disposed on a surface of the positive electrode current collector 30. The positive electrode mixture layer 31 is preferably disposed on opposite sides of the positive electrode current collector 30. The positive electrode current collector 30 may include a foil of a metal, such as aluminum or an aluminum alloy, which is stable in the potential range of the positive electrode 11, or a film having such a metal disposed as a surface layer, for example. The positive electrode mixture layer 31 may include a positive electrode active material, a conductive agent, and a binder. The positive electrode mixture layer 31 has a thickness of 10 µm to 150 µm on one side of the positive electrode current collector 30, for example. The positive electrode 11 may be produced by applying a positive electrode slurry including the positive electrode active material, the conductive agent, and the binder, for example, on each surface of the positive electrode current collector 30, and, after drying the applied membrane, the applied membrane is rolled. Thus, the positive electrode mixture layers 31 are formed on the respective surfaces of the positive electrode current collector 30.

Examples of the conductive agent contained in the positive electrode mixture layer 31 include carbon-based materials such as carbon black (CB), acetylene black (AB), Ketjenblack, carbon nanotubes (CNT), graphene, and graphite, for example. Only one type of these materials may be used alone, or two or more thereof may be used in combinations.

Examples of the binder contained in the positive electrode mixture layer 31 include fluororesins such as polytetrafluoroethylene (PTFE) and polyvinylidene fluoride (PVdF), polyacrylonitrile (PAN), polyimide-based resins, acrylic resins, and polyolefin resins. One type of these materials may be used alone, or two or more thereof may be used in combinations.

The positive electrode active material contained in the positive electrode mixture layer 31 includes a lithium-containing composite oxide and a sulfonic acid compound that is present on the surface of the lithium-containing composite oxide. The lithium-containing composite oxide includes secondary particles formed of agglomeration of primary particles. Here, the surface of the lithium-containing composite oxide refers to the surface of the secondary particles of the lithium-containing composite oxide, or an interface where the primary particles contact each other. In other words, the sulfonic acid compound is present on the surface of the secondary particles of the lithium-containing composite oxide, or on the interface where the primary particles contact each other.

The primary particles constituting the secondary particles of the lithium-containing composite oxide have a particle size of 0.02 µm to 2 µm, for example. The particle size of the primary particle is measured as a diameter of a circumcircle in a particle image observed with a scanning electron microscope (SEM). The secondary particle of the lithium-containing composite oxide has a mean particle size of 2 µm to 30 µm, for example. The mean particle size as used herein refers to a volume-basis median diameter (D50). D50 refers to a particle size at which a cumulative sum of frequencies of the particle size is 50% from the smallest value in the volume-basis particle size distribution, and is also referred to as a median diameter. The particle size distribution of the secondary particles of the lithium-containing composite oxide can be measured with a laser diffraction particle size distribution measuring apparatus (e.g., MT3000II from Microtrac BEL Corp.) using water as a dispersion medium.

The lithium-containing composite oxide has a layered rock salt structure. Examples of the layered rock salt structure of the lithium-containing composite oxide include, for example, a layered rock salt structure belonging to a space group R-3m and a layered rock salt structure belonging to a space group C2/m. In terms of achieving high capacity and stability of the crystal structure, the lithium-containing composite oxide preferably has a layered rock salt structure belonging to the space group R-3m. The layered rock salt structure of the lithium-containing composite oxide may include a transition metal layer, an Li layer, and an oxygen layer.

The lithium-containing composite oxide contains 80 mol% or more of Ni, 1.5 mol% or more of Co, and 4 mol% or more of Al relative to the total number of moles of metal elements other than Li. The content of the metal elements contained in the lithium-containing composite oxide are measured based on inductively coupled plasma (ICP) emission spectrometry.

The lithium-containing composite oxide containing greater than or equal to 80 mol% of Ni achieves a high capacity battery. The content of Ni in the lithium-containing composite oxide is preferably greater than or equal to 90 mol%. This can achieve higher capacity batteries.

The lithium-containing composite oxide containing 1.5 mol% or more of Co enables an increase in the heat resistance of a battery. The upper limit value of the content of Co is 16 mol%, for example.

The lithium-containing composite oxide containing 4 mol% or more of Al enables stabilization of the crystal structure of the lithium-containing composite oxide. The upper limit value of the content of Al is 18.5 mol%, for example.

The lithium-containing composite oxide may be a complex oxide represented by general formula LiₐNiₓCo_{y}Al_{z}Ml_{w}O_{2-b} (where 0.8≦a≦1.2, 0.80^x^0.95, 0.015≦y≦ 0.16, 0.04^z^0.185, 0^w^0.145, 0≦b<0.05, x+y+z+w=1, and M1 is at least one element selected from the group consisting of Mn, Fe, Ti, Si, Nb, Zr, Mo, and Zn). M1 is preferably Mn.

The sulfonic acid compound that is present on the surface of the lithium-containing composite oxide is represented by the following general formula I: 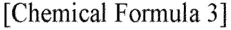 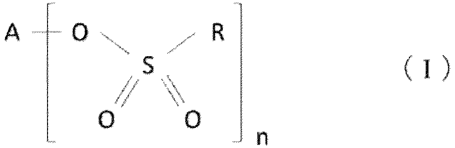 (where A is a Group 1 element or a Group 2 element, R is hydrocarbon group, and n is 1 or 2.)

In general formula I, A is preferably a Group 1 element and is more preferably Li. This enables further increase in the output characteristics. If A is a Group 1 element, the relation of n=1 is satisfied.

In general formula I, R is preferably an alkyl group. R is preferably an alkyl group having a carbon number of 5 or smaller, more preferably an alkyl group having a carbon number of 3 or smaller, and particularly preferably a methyl group. In R, part of hydrogen bound to carbon may be replaced with fluorine. However, hydrogen bound to R are not entirely replaced with fluorine. The smaller the molecular weight R has, the smaller the reaction resistance.

Examples of the sulfonic acid compound include lithium methanesulfonate, lithium ethanesulfonate, lithium propanesulfonate, sodium methanesulfonate, magnesium methanesulfonate, and lithium fluoromethanesulfonate, for example.

The sulfonic acid compound is present on the surface of the lithium-containing composite oxide in the amount of preferably 0.1% by mass to 1% by mass and more preferably 0.3% by mass to 0.8% by mass relative to the mass of the lithium-containing composite oxide.

Presence of the sulfonic acid compound on the surface of the lithium-containing composite oxide can be confirmed by Fourier transform infrared spectroscopy (FT-IR). In the infrared absorption spectrum obtained by FT-IR, the positive electrode active material may have the absorption peak at at least one point in the vicinity of 1238 cm⁻¹, 1175 cm⁻¹, 1065 cm⁻¹, and 785 cm⁻¹.

In the infrared absorption spectrum obtained by FT-IR, the positive electrode active material containing lithium methanesulfonate, for example, has the absorption peaks in the vicinity of 1238 cm⁻¹, 1175 cm⁻¹, 1065 cm⁻¹, and 785 cm⁻¹. The peaks in the vicinity of 1238 cm⁻¹, 1175 cm⁻¹, and 1065 cm⁻¹ are absorption peaks caused byS-O stretching vibrations originated from lithium methanesulfonate. The peak in the vicinity of 785 cm⁻¹ is an absorption peak caused by C-S stretching vibrations originated from lithium methanesulfonate.

Regarding the positive electrode active material containing a sulfonic acid compound other than lithium methanesulfonate, similar to the positive electrode active material containing lithium methanesulfonate, the absorption peak originated from the sulfonic acid compound contained in the positive electrode active material can be identified. The presence of the sulfonic acid compound on the surface of the lithium-containing composite oxide can also be confirmed by ICP, atomic absorption spectrometry, X-ray photoelectron spectroscopy (XPS), radiation XRD measurement, TOF-SIMS, and other methods.

The mean particle size of the sulfonic acid compound is preferably 10 µm or less, more preferably 5 µm or less, and further more preferably 3 µm or less. The sulfonic acid compound having the mean particle size of preferably 10 µm or less, more preferably 5 µm or less, and further more preferably 3 µm or less enables further uniform adhesion to the entire positive electrode active material powder, thereby making the effects of the sulfonic acid compound more apparent. The lower limit value of the mean particle size of the sulfonic acid compound is 0.1 µm, for example. Here, the mean particle size of the sulfonic acid compound can be determined by observing the sulfonic acid compound adhered to the surface of the lithium-containing composite oxide with an SEM. Specifically, after specifying the outer shapes of 50 particles randomly selected, the average value of the longitudinal diameters (longest diameters) of the 50 particles is determined as the mean particle size of the sulfonic acid compound.

A metal compound may be present on the surface of the lithium-containing composite oxide. The metal compound includes one or more metal elements selected from the group consisting of Sr, Ca, W, Zr, rare earths, and Al. Examples of a compound containing Sr include SrO, Sr(OH)₂, and SrCO₃. Examples of a compound containing Ca include CaO, Ca(OH)₂, and CaCO₃. Examples of a compound containing W include WO₃. Examples of compounds containing Al include Al₂O₃. Examples of a compound containing Zr include ZrO₂, Zr(OH)₄, Zr(CO₃)₂ and, Zr(SO₄)₂·4H₂O. Examples of a compound containing rare earth include oxide, hydroxide, carbonate, sulfate, nitrate, and phosphate of rare earth. The metal compound may contain a plurality of these metal elements, and may be SrAlO₄, and CaAlO₄, for example. The metal compound may further contain Li, and may be lithium tungstate.

A nonmetal compound may be present on the surface of the lithium-containing composite oxide. The nonmetal compound includes one or more nonmetal elements selected from the group consisting of P and B, for example. Examples of a compound containing P may include Li₃₋ₓHₓPO₄ (0≦x≦3). Examples of a compound containing B may include, H₃BO₃, Li₃BO₃, and Li₂B₄O₇.

When a filtrate of a water dispersion prepared by dispersing 1g of the positive electrode active material in 70 ml of pure water is titrated with hydrochloric acid, with the acid consumption to the first point of inflection of a pH curve being X mol/g and the acid consumption to the second point of inflection being Y mol/g, the value of Y-X is preferably 130 µmol/g or less, more preferably 100 µmol/g or less, and more preferably 60 µmol/g or less The value of X-(Y-X) is preferably 130 µmol/g or less, more preferably 100 µmol/g or less, and further preferably 60 µmol/g or less. As such, the positive electrode active material may contain a small amount of water-soluble alkali component that is titrated with acid. A small amount of the alkali component contained in the positive electrode active material improves slurry stability to thereby increase productivity.

The positive electrode active material contains an alkali component in an amount equivalent to the acid consumption described above. Examples of the alkali component include, for example, lithium hydroxide (LiOH) and lithium carbonate (Li₂CO₃). Lithium carbonate and lithium hydroxide may be present on the interface of each primary particle within the composite oxide particle and on the surface of the secondary particles which are aggregates of the primary particles. The lithium carbonate and lithium hydroxide are preferably present evenly and uniformly, rather than being unevenly distributed on a part of the surface of the primary particles.

The specific quantitative method for the water-soluble alkali component to be extracted from the positive electrode active material is as follows: The titration method as described below is typically referred to as a Warder method.
(1) First, 1 g of the positive electrode active material is added to 30 ml of pure water and stirred, and a suspension containing dispersed active material is prepared.
(2) The suspension is filtered, and pure water is added to fill the container up to 70 ml and obtain a filtrate containing water-soluble alkali components eluted from the active material.
(3) Hydrochloric acid is dripped into the filtrate by a small amount while measuring the pH of the filtrate, and the amount (titration amount) X mol/g of the hydrochloric acid that has been consumed until the first point of inflection of the pH curved line (around pH8) is reached and the amount Y mol/g of the hydrochloric acid that has been consumed until the second point of inflection of the pH curved line (around pH4) is reached are determined. Here, the point of inflection refers to a peak position of a differential value with respect to the titration amount.

The positive electrode mixture layer 31 may include a positive electrode active material other than the positive electrode active materials described in the above embodiment. Examples of other positive electrode active materials may include a lithium-containing composite oxide containing Ni in the content of equal to or greater than 0 mol% and less than 80 mol%.

An example manufacturing method of a positive electrode active material according to the present embodiment will be described. The manufacturing method of a positive electrode active material includes a synthesis process, a washing process, a drying process, and an adding process.

In the synthesis process, a metal oxide containing 80 mol% or more of Ni, 1.5 mol% or more of Co, and 4 mol% or more of Al, is mixed with an Li compound and the mixture is calcined to acquire a lithium-containing composite oxide.

The metal oxide can be obtained as follows: droplets of an alkaline solution of sodium hydroxide, for example, are added to a solution of a metal salt containing Ni, Co, Al, and any optional metal element (such as Mn and Fe) while stirring the metal salt solution to adjust the pH of the mixture toward the alkaline side (for example, 8.5 to 12.5). This causes a composite hydroxide containing Ni, Co, Al, and the optional metal element to be precipitated (or co-precipitated). The heat treatment temperature is not particularly limited, and may be in the range of 300°C to 600°C, for example.

Examples of the Li compound include Li₂CO₃, LiOH, LizOz, Li₂O, LiNO₃, LiNO₂, Li₂SO₄, LiOH·H₂O, LiH, and LiF. To facilitate adjustment of the above-noted parameters within the above-defined ranges, the mixing ratio of the metal oxide and the Li compound is preferably set, for example, to a ratio that enables the molar ratio of metal elements other than Li to Li to fall within the range of 1:0.98 to 1:1.1. In mixing the metal oxide and the Li compound, other raw metal materials may be added as necessary. Other raw metal materials as used herein include oxides containing metal elements other than the metal elements constituting the metal oxide.

The mixture of the metal oxide and the Li compound is calcined in an oxygen atmosphere, for example. The calcination conditions may be such that the heating rate at 450°C or higher and 680°C or lower may be in the range of more than 1.0°C/min and 5.5°C/min or less, and the maximum temperature reached may be in the range of 700°C or higher and 850°C or lower. The heating rate from over 680°C to the maximum temperature reached may be 0.1°C/min to 3.5°C/min, for example. The maximum temperature reached may be maintained for 1 hour or more and 10 hours or less. Further, this calcination process may be a multi-stage calcination process; a first heating rate and a second heating rate that fall within the above-defined ranges may be determined for individual temperature ranges.

In the washing process, the lithium-containing composite oxide obtained in the synthesis process is washed with water and dehydrated to obtain a cake-like composition. Washing with water and dehydration can be performed using known methods and conditions, and may be carried out within the extent that elution of lithium from the lithium-containing composite oxide is prevented to thereby prevent deterioration of the battery characteristics. The positive electrode active material according to the present embodiment is washed with water; therefore, there remains only a small amount of alkaline component.

In the drying process, the cake-like composition obtained in the washing step is dried to obtain a powdery composition. The drying process may be performed in a vacuum atmosphere. Example drying conditions are as follows: 150°C to 400°C for 0.5 hours to 15 hours.

In the adding process, at least one of a sulfonic acid compound and a sulfonic acid solution is added to the cake-like composition obtained in the washing process or to the powdery composition obtained in the drying process. This allows a sulfonic acid compound to be attached to a surface of the lithium-containing composite oxide. At least one of a sulfonic acid compound and a sulfonic acid solution is preferably added to the cake-like composition. The Li compound remains in the cake-like composition and this residual Li compound is dissolved in the water contained in the cake-like composition. Therefore, addition of the sulfonic acid solution results in formation of a sulfonic acid compound containing Li. The amount of the sulfonic acid compound or sulfonic acid added is preferably 0.1% by mass to 1% by mass, and more preferably 0.3% by mass to 0.8% by mass, based on the mass of the lithium-containing composite oxide. The concentration of the sulfonic acid solution is 0.5% by mass to 40% by mass, for example.

A metal compound containing one or more metal elements selected from the group consisting of Sr, Ca, W, Zr, rare earth elements, and Al, and a non-metal compound containing one or more non-metal elements selected from the group consisting of P and B, can be attached to a surface of the lithium-containing composite oxide by adding raw materials of the metal compound and the non-metal compound either during the synthesis process, after the synthesis process, during the washing process, after the washing process, during the drying process, after the drying process, or during the addition process. Examples of a raw Sr material include Sr(OH)₂, Sr(OH)₂·8H₂O, SrO, SrCO₃, SrSO₄, Sr(NO₃)₂, SrCl₂, and SrAlO₄. Examples of a raw Ca material include Ca(OH)₂, CaO, CaCO₃, CaSO₄, Ca(NO₃)₂, CaCl₂, and CaAlO₄. Examples of a raw Zr material include Zr(OH)₄, ZrO₂, Zr(CO₃)₂, and Zr(SO₄)₂·4H₂O. Examples of a raw rare earth material include oxides, hydroxides, and carbonates of rare earth elements. Examples of a raw W material include tungsten oxide (WO₃) and lithium tungstate (Li₂WO₄, Li₄WO₅, Li₆W₂O₉). A solution containing W may be used as a raw W material. Further, a raw Al material may be Al₂O₃, Al(OH)₃, Al₂(SO₄)₃, and may also be Al derived from the lithium-containing composite oxide. Examples of a raw P material include Li₃₋ₓHₓPO₄ (where 0 ≤ x ≤ 3). Examples of a raw B material include H₃BO₃, Li₃BO₃, and Li₂B₄O₇.

### [Negative Electrode]

The negative electrode 12 includes a negative electrode current collector 40 and a negative electrode mixture layer 41 formed on a surface of the negative electrode current collector 40. The negative electrode mixture layer 41 is preferably formed on each of opposite sides of the negative electrode current collector 40. The negative electrode current collector 40 may be a foil of a metal such as copper or a copper alloy which is stable in the potential range of the negative electrode 12, or a film having such a metal disposed on its surface layer. The negative electrode mixture layer 41 may include a negative electrode active material and a binder. The negative electrode mixture layer 41 has a thickness of 10 µm to 150 µm, for example, on one side of the negative electrode current collector 40. The negative electrode 12 may be produced as follows: a negative electrode slurry containing the negative electrode active material and the binder, for example, is applied onto each surface of the negative electrode current collector 40, and is dried, and thereafter, the applied coating is rolled to form negative electrode mixture layers 41 on both sides of the negative electrode current collector 40.

The negative electrode active material contained in the negative electrode mixture layer 41 is not particularly limited and may be a material that can reversibly occlude and release lithium ions, and may typically be a carbon material such as graphite. Graphite may be either natural graphite such as flake graphite, massive graphite, and earthy graphite, or artificial graphite such as massive artificial graphite and graphitized mesophase carbon microbeads. The negative electrode active material may also be a metal that forms an alloy with Li such as Si and Sn, a metal compound containing Si, Sn, or the like, or a lithium-titanium composite oxide, for example, or may be these materials having a carbon coating provided thereon. For example, in combination with graphite, an Si-containing compound represented by SiOₓ (where 0.5 ≤ x ≤ 1.6), an Si-containing compound containing fine particles of Si dispersed in a lithium silicate phase represented by Li_{2y}SiO_{(2+y)} (where 0 < y < 2), for example, may be used.

Examples of the binder contained in the negative electrode mixture layer 41 include styrene-butadiene rubber (SBR), nitrile-butadiene rubber (NBR), carboxymethyl cellulose (CMC) or a salt thereof, polyacrylic acid (PAA) or a salt thereof (which may be PAA-Na, PAA-K, for example, or a partially neutralized salt), and polyvinyl alcohol (PVA). A single type among these may be used alone, or two or more types may be used in combination.

### [Separator]

The separator 13 is a porous sheet having ion permeability and insulation properties, for example. Specific examples of the porous sheet include a microporous thin film, woven fabric, and non-woven fabric. A material of the separator is preferably polyolefins such as polyethylene and polypropylene, and cellulose, for example. The separator 13 may have a single-layer structure or a laminated structure. Further, the separator 13 may include, on its surface, a highly heat-resistant resin layer made of aramid resin, for example, or a filler layer containing an inorganic compound filler.

### [Non-Aqueous Electrolyte]

The non-aqueous electrolyte contains, for example, a non-aqueous solvent and an electrolyte salt dissolved in the non-aqueous solvent. The non-aqueous solvent may include, for example, esters, ethers, nitriles such as acetonitrile, amides such as dimethylformamide, and a mixed solvent containing two or more of the foregoing. The non-aqueous solvent may contain a halogen-substituted product obtained by substituting at least part of hydrogen atoms in the above solvents with halogen atoms such as fluorine. Examples of the halogen-substituted product include fluorinated cyclic carbonate esters such as fluoroethylene carbonate (FEC), fluorinated chain carbonate esters, and fluorinated chain carboxylate esters such as methyl fluoropropionate (FMP), for example.

Examples of the above-noted esters include: cyclic carbonate esters such as ethylene carbonate (EC), propylene carbonate (PC), and butylene carbonate; chain carbonate esters such as dimethyl carbonate (DMC), ethyl methyl carbonate (EMC), diethyl carbonate (DEC), methyl propyl carbonate, ethyl propyl carbonate, and methyl isopropyl carbonate; cyclic carboxylate esters such as γ-butyrolactone (GBL) and γ-valerolactone (GVL); and chain carboxylate esters such as methyl acetate, ethyl acetate, propyl acetate, methyl propionate (MP), and ethyl propionate (EP).

Examples of the above-noted ethers include: cyclic ethers such as 1,3-dioxolane, 4-methyl-1,3-dioxolane, tetrahydrofuran, 2-methyltetrahydrofran, propylene oxide, 1,2-butylene oxide, 1,3-dioxane, 1,4-dioxane, 1,3,5-trioxane, furan, 2-methylfuran, 1,8-cineole, and crown ethers; and chain ethers such as 1,2-dimethoxyethane, diethyl ether, dipropyl ether, diisopropyl ether, dibutyl ether, dihexyl ether, ethyl vinyl ether, butyl vinyl ether, methyl phenyl ether, ethyl phenyl ether, butyl phenyl ether, pentyl phenyl ether, methoxy toluene, benzyl ethyl ether, diphenyl ether, dibenzyl ether, o-dimethoxybenzene, 1,2-diethoxyethane, 1,2-dibutoxyethane, diethylene glycol dimethyl ether, diethylene glycol diethyl ether, diethylene glycol dibutyl ether, 1,1-dimethoxymethane, 1,1-diethoxyethane, triethylene glycol dimethyl ether, and tetraethylene glycol dimethyl ether.

The electrolyte salt is preferably lithium salt. Examples of the lithium salt include LiBF₄, LiClO₄, LiPF₆, LiAsF₆, LiSbF₆, LiAlCl₄, LiSCN, LiCF₃SO₃, LiCF₃CO₂, Li(P(C₂O₄)F₄), LiPF₆₋ₓ(CₙF₂ₙ₊₁)ₓ (where 1 < x < 6, and n is 1 or 2), LiB₁₀Cl₁₀, LiCl, LiBr, LiI, chloroborane lithium, lower aliphatic lithium carboxylate, borate salts such as Li₂B₄O₇ and Li(B(C₂O₄)F₂), and imide salts such as LiN(SO₂CF₃)₂ and LiN(C₁F₂ₗ₊₁SO₂)(CₘF₂ₘ₊₁SO₂) (where each of l and m is an integer of 0 or greater). As the lithium salt, a single type among these may be used alone, or a plurality of types may be mixed and used. Among the foregoing, LiPF₆ is preferably used in terms of ion conductivity and electrochemical stability, for example. The concentration of the lithium salt is, for example, 0.8 mol to 1.8 mol per 1 liter of the non-aqueous solvent. Further, vinylene carbonate, a propane sultone based additive, and the like may be added.

### EXAMPLES

The present disclosure will be further described based on Examples and Comparative Examples; however, the present disclosure is not limited to the examples below.

### <Example 1>

### [Production of Positive Electrode Active Material]

A composite hydroxide represented by [Ni_{0.90}Co_{0.05}Al_{0.05}](OH)₂ that was obtained by a co-precipitation method was calcined at 500°C for 8 hours, and a metal oxide (Ni_{0.90}Co_{0.05}Al_{0.05}O₂) was obtained. Then, LiOH and the metal oxide were mixed in such a manner that the molar ratio of Li to the total amount of Ni, Co, and Al was 1.03: 1, and a mixture was obtained. This mixture was calcined under an oxygen stream having an oxygen concentration of 95% (with a flow rate of 2 mL/min per 10 cm³ and 5 L/min per 1 kg of the mixture) at a heating rate of 2.0°C/min from room temperature to 650°C. Thereafter, the mixture was further calcined at a heating rate of 0.5°C/min from 650°C to 780°C, and a lithium-containing composite oxide was obtained (synthesis process). Water was added to this lithium-containing composite oxide until a slurry concentration of 1500 g/L was reached, and the slurry was stirred for 15 minutes and filtered to obtain a cake-like composition (washing process). Then, lithium methanesulfonate in powder form was added to this cake-like composition (adding process). The amount of lithium methanesulfonate added was 0.1% by mass relative to the total mass of the lithium-containing composite oxide. After the adding process, a drying process was performed at 180°C for 2 hours in a vacuum atmosphere, and a positive electrode active material in Example 1 was obtained. Fourier transform infrared spectroscopy (FT-IR) confirmed presence of lithium methanesulfonate on the surface of the positive electrode active material. Further, the value of Y-X of the positive electrode active material was 26 µmol/g, and the value of X-(Y-X) was 24 µmol/g.

### [Production of Positive Electrode]

First, 92 parts by mass of a positive electrode active material, 5 parts by mass of acetylene black or a conductive agent, and 3 parts by mass of polyvinylidene fluoride or a binder, were mixed, and this mixture was further mixed with N-methyl-2-pyrrolidone (NMP) to prepare a positive electrode slurry. Then, this slurry is applied to each of opposite faces of a positive electrode current collector made of an aluminum foil having a thickness of 15 µm. The coated film was dried, and thereafter rolled by a pressure roller and cut into pieces having a predetermined electrode size, and thus the positive electrodes were produced. At this time, the positive electrode partially includes an exposed portion that exposes the surface of the positive electrode current collector.

### [Preparation of Non-Aqueous Electrolyte]

Ethylene carbonate (EC), methyl ethyl carbonate (MEC), and dimethyl carbonate (DMC) were mixed in a volume ratio of 3:3:4. Lithium hexafluorophosphate (LiPF₆) was dissolved into this mixed solvent to a concentration of 1.2 mol/L, and a non-aqueous electrolyte was thereby prepared.

### [Production of Test Cell]

A positive electrode lead was attached to the exposed portion of the positive electrode, and a negative electrode lead was attached to an Li metal foil that serves as the negative electrode. Then, the positive electrode and the negative electrode were wound spirally with a polyolefins separator disposed between the positive electrode and the negative electrode, and were thereafter radially press-molded, thereby producing a flat wound electrode assembly. This electrode assembly was stored within an outer housing made of an aluminum laminate sheet, and after injecting the non-aqueous electrolyte, an opening of the outer housing was sealed to provide a test cell.

### [Evaluation of Output Characteristics]

The test cell was charged with a constant current of 0.2 C in a temperature environment of 25°C until the cell voltage reached 4.3 V (vs Li), and was thereafter charged with a constant voltage of 4.3 V (vs Li) until the current value reached 0.02 C. After 1 hour, the test cell was discharged with a constant current of 0.2 C until the cell voltage reached 2.5 V (vs Li). After that, the test cell is charged once again with a constant current of 0.2 C in a temperature environment of 25°C until the cell voltage reached 4.3 V (vs Li), and then was charged with a constant voltage of 4.3V (vs Li) until the current value reached 0.02 C. Subsequently, the test cell was discharged with a constant current of 0.5 C until the cell voltage reached 2.5 V (vs Li), and the discharge capacity at this time was measured. After 10 minutes, the test cell was discharged with a constant current of 0.02 C until the cell voltage reached 2.5V (vs Li), and the discharge capacity at this time was measured. Then, the output characteristics of the test cell were determined according to the following expression:
Output characteristics = (discharge capacity with 0.5 C)/(discharge capacity with 0.5 C + discharge capacity with 0.02 C)

### <Example 2>

A test cell was produced and evaluated in the same manner as in Example 1 except that, in the adding process of production of the positive electrode active material, the amount of lithium methanesulfonate added was 0.3% by mass relative to the total mass of the lithium-containing composite oxide.

### < Example 3 >

A test cell was produced and evaluated in the same manner as in Example 1 except that, in the adding process of production of the positive electrode active material, the amount of lithium methanesulfonate added was 0.5% by mass relative to the total mass of the lithium-containing composite oxide.

### <Example 4>

A test cell was produced and evaluated in the same manner as in Example 1 except that, in the adding process of production of the positive electrode active material, the amount of lithium methanesulfonate added was 0.8% by mass relative to the total mass of the lithium-containing composite oxide.

### <Example 5>

A test cell was produced and evaluated in the same manner as in Example 1 except that, in the adding process of production of the positive electrode active material, the amount of lithium methanesulfonate added was 1% by mass relative to the total mass of the lithium-containing composite oxide.

### <Example 6>

A test cell was produced and evaluated in the same manner as in Example 1 except that, in the adding process of production of the positive electrode active material, sodium methanesulfonate, in place of lithium methanesulfonate, was added, and the amount of sodium methanesulfonate added was 0.5% by mass relative to the total mass of the lithium-containing composite oxide.

### <Example 7>

A test cell was produced and evaluated in the same manner as in Example 1 except that, in the adding process of production of the positive electrode active material, lithium ethanesulfonate, in place of lithium methanesulfonate, was added, and the amount of lithium ethanesulfonate added was 0.5% by mass relative to the total mass of the lithium-containing composite oxide.

### <Example 8>

A test cell was produced and evaluated in the same manner as in Example 1 except that, in the adding process of production of the positive electrode active material, a methanesulfonic acid solution, in place of lithium methanesulfonate in powder form, was added, and the amount of methanesulfonic acid added was 0.48% by mass relative to the total mass of the lithium-containing composite oxide. The concentration of the added methanesulfonic acid solution was 10% by mass, and the methanesulfonic acid solution was added such that the amount of methanesulfonic acid added was as noted above. Fourier transform infrared spectroscopy (FT-IR) confirmed that lithium methanesulfonate was present on the surface of the positive electrode active material.

### <Example 9>

A test cell was produced and evaluated in the same manner as in Example 1 except that, in the synthesis process in production of the positive electrode active material, the composition of the metal oxide was changed to Ni_{0.82}Co_{0.02}Al_{0.06}Mn_{0.10}O₂, and in the adding process, the amount of lithium methanesulfonate added was 0.5% by mass relative to the total mass of the lithium-containing composite oxide. The value of Y-X of the positive electrode active material was 53 µmol/g, and the value of X-(Y-X) was 55 µmol/g.

### <Comparative Example 1>

A test cell was produced and evaluated in the same manner as in Example 1 except that the adding process was not performed in producing the positive electrode active material.

### <Comparative Example 2>

A test cell was produced and evaluated in the same manner as in Example 8 except that, in the adding process in production of the positive electrode active material, 10% by mass of a lithium succinate solution was added, in place of the methanesulfonic acid solution, and the amount of lithium succinate added was 0.5% by mass relative to the total mass of the lithium-containing composite oxide.

### <Comparative Example 3>

A test cell was produced and evaluated in the same manner as in Example 8 except that, in the adding process in production of the positive electrode active material, 10% by mass of a lithium oxalate solution was added, in place of the methanesulfonic acid solution, and the amount of lithium oxalate added was 0.5% by mass relative to the total mass of the lithium-containing composite oxide.

### <Comparative Example 4>

A test cell was produced and evaluated in the same manner as in Example 9 except that the adding process was not performed in producing the positive electrode active material.

### <Comparative Example 5>

A test cell was produced and evaluated in the same manner as in Example 9 except that, in the adding process in production of the positive electrode active material, 10% by mass of a lithium succinate solution was added, in place of lithium methanesulfonate in powder form, and the amount of lithium succinate added was 0.5% by mass relative to the total mass of the lithium-containing composite oxide.

### <Comparative Example 6>

A test cell was produced and evaluated in the same manner as in Example 9 except that, in the adding process in production of the positive electrode active material, 10% by mass of a lithium oxalate solution was added, in place of lithium methanesulfonate in powder form, and the amount of lithium oxalate added was 0.5% by mass relative to the total mass of the lithium-containing composite oxide.

Table 1 and Table 2 show the output characteristics of the test cells in Examples and Comparative Examples. Tables 1 and 2 further show the compositions of lithium-containing a composite oxide, the added sulfonic acid compounds, the methods of addition, and the amounts added. The output characteristics of the test cells in Examples 1 to 8 and Comparative Examples 2 to 3 shown in Table 1 are expressed with respect to the value of the output characteristics of the test cell in Comparative Example 1, which is assumed to be 100. The output characteristics of the test cells in Example 9 and Comparative Examples 5 to 6 shown in Table 2 are expressed with respect to the value of the output characteristics of the test cell in Comparative Example 4, which is assumed to be 100.

**[Table 1]**

| | Positive electrode active material | | | | | | | Evaluation result |
|---|---|---|---|---|---|---|---|---|
| | Composition of lithium-containing composite oxide | | | | Sulfonic acid compound | | | |
| | Ni [mol%] | Co [mol%] | Al [mol%] | Mn [mol%] | Added compound | Method of addition | Amount added [mass%] | Output characteristics |
| Example 1 | 90 | 5 | 5 | 0 | Li methanesulfonate | Added in powder form | 0.1 | 101.3 |
| Example 2 | 90 | 5 | 5 | 0 | Li methanesulfonate | Added in powder form | 0.3 | 101.6 |
| Example 3 | 90 | 5 | 5 | 0 | Li methanesulfonate | Added in powder form | 0.5 | 102.0 |
| Example 4 | 90 | 5 | 5 | 0 | Li methanesulfonate | Added in powder form | 0.8 | 101.1 |
| Example 5 | 90 | 5 | 5 | 0 | Li methanesulfonate | Added in powder form | 1.0 | 100.8 |
| Example 6 | 90 | 5 | 5 | 0 | Na methanesulfonate | Added in powder form | 0.5 | 100.5 |
| Example 7 | 90 | 5 | 5 | 0 | Li ethanesulfonate | Added in powder form | 0.5 | 101.3 |
| Example 8 | 90 | 5 | 5 | 0 | Methanesulfonic acid | Added in solution form | 0.48 | 101.4 |
| Comparative Example 1 | 90 | 5 | 5 | 0 | - | - | - | 100 |
| Comparative Example 2 | 90 | 5 | 5 | 0 | Li succinate | Added in solution form | 0.5 | 99.8 |
| Comparative Example 3 | 90 | 5 | 5 | 0 | Li oxalate | Added in solution form | 0.5 | 99.4 |

**[Table 2]**

| | Positive electrode active material | | | | | | | Evaluation result |
|---|---|---|---|---|---|---|---|---|
| | Composition of lithium-containing composite oxide | | | | Sulfonic acid compound | | | |
| | Ni [mol%] | Co [mol%] | Al [mol%] | Mn [mol%] | Added compound | Method of addition | Amount added [mass%] | Output characteristics |
| Example 9 | 82 | 2 | 6 | 10 | Li methanesulfonate | Added in powder form | 0.5 | 102.3 |
| Comparative Example 4 | 82 | 2 | 6 | 10 | - | - | - | 100 |
| Comparative Example 5 | 82 | 2 | 6 | 10 | Li succinate | Added in solution form | 0.5 | 99.8 |
| Comparative Example 6 | 82 | 2 | 6 | 10 | Li oxalate | Added in solution form | 0.5 | 99.5 |

In Tables 1 and 2, the test cells in Examples showed increased output characteristics compared to the output characteristics of the test cells in the Comparative Examples. Use of a positive electrode active material containing a sulfonic acid compound that is present on the surface of a lithium-containing a composite oxide having a predetermined composition enables acquisition of a non-aqueous electrolyte secondary battery having high capacity and improved output characteristics.

### <Example 10>

A test cell was produced and evaluated in the same manner as in Example 1 except that, in the adding process of production of the positive electrode active material, a lithium methanesulfonate solution prepared by dissolving lithium methanesulfonate in pure water was added, in place of lithium methanesulfonate in powder form, and the amount of lithium methanesulfonate added was 0.5% by mass relative to the total mass of the lithium-containing composite oxide. The concentration of the added lithium methanesulfonate solution was 10% by mass, and the lithium methanesulfonate solution was added such that the amount of lithium methanesulfonate added was as noted above. Fourier transform infrared spectroscopy (FT-IR) confirmed that lithium methanesulfonate was present on the surface of the positive electrode active material.

### <Example 11>

A test cell was produced and evaluated in the same manner as in Example 10 except that, in the adding process of production of the positive electrode active material, a solution containing methanesulfonic acid and LiOH (hereinafter referred to as a methanesulfonic acid + LiOH solution), which was prepared by dissolving methanesulfonic acid and LiOH in pure water at a molar ratio of 1 :0.5, was added instead of the lithium methanesulfonate solution, and the amount of lithium methanesulfonate added was 0.49% by mass relative to the total mass of the lithium-containing composite oxide. The concentration of the added methanesulfonic acid + LiOH solution was 10% by mass, and the methanesulfonic acid + LiOH solution was added such that the amount of lithium methanesulfonate added became as noted above.

### <Example 12>

A test cell was produced and evaluated in the same manner as in Example 10 except that, in the adding process of production of the positive electrode active material, a methanesulfonic acid + LiOH solution in which the molar ratio of methanesulfonic acid and LiOH was adjusted to 1: 1 was added, in place of the lithium methanesulfonate solution, and the amount of lithium methanesulfonate added was 0.5% by mass relative to the total mass of the lithium-containing composite oxide. The concentration of the added methanesulfonic acid + LiOH solution was 10% by mass, and the methanesulfonic acid + LiOH solution was added such that the amount of lithium methanesulfonate added was as noted above.

Table 3 shows the output characteristics of the test cells in Examples 10 to 12 and Comparative Example 1. In Table 3, the output characteristics of the test cells in Examples 10 to 12 are expressed with respect to the value of the output characteristics of the test cell in Comparative Example 1, which is assumed to be 100.

**[Table 3]**

| | Positive electrode active material | | | | | | | Evaluation result |
|---|---|---|---|---|---|---|---|---|
| | Composition of lithium-containing composite oxide | | | | Sulfonic acid compound | | | |
| | Ni [mol%] | Co [mol%] | Al [mol%] | Mn [mol%] | Added compound | Method of addition | Amount added [mass%] | Output characteristics |
| Example 10 | 90 | 5 | 5 | 0 | Li methanesulfonate | Added in solution form | 0.5 | 102.0 |
| Example 11 | 90 | 5 | 5 | 0 | Methanesulfonic acid + LiOH (Li / methanesulfonic acid = 0.5 [molar ratio]) | Added in solution form | 0.49 | 101.8 |
| Example 12 | 90 | 5 | 5 | 0 | Methanesulfonic acid + LiOH (Li / methanesulfonic acid = 1.0 [molar ratio]) | Added in solution form | 0.5 | 102.0 |
| Comparative Example 1 | 90 | 5 | 5 | 0 | - | - | - | 100 |

In Table 3, the test cells in Examples 10 to 12 showed increased output characteristics compared to the test cell in Comparative Example 1. It can be determined that a method in which a sulfonic acid solution and an Li compound are added to the cake-like composition also enables formation of lithium methanesulfonate on the surface of the positive electrode active material, thereby improving the output characteristics.

### REFERENCE SIGNS LIST

10 non-aqueous electrolyte secondary battery, 11 positive electrode, 12 negative electrode, 13 separator, 14 electrode assembly, 15 battery casing, 16 exterior can, 17 sealing assembly, 18, 19 insulating plate, 20 positive electrode tab, 21 negative electrode tab, 22 groove portion, 23 bottom plate, 24 lower valve element, 25 insulating member, 26 upper valve element, 27 cap, 28 gasket, 30 positive electrode current collector, 31 positive electrode mixture layer, 40 negative electrode current collector, 41 negative electrode mixture layer.

## Claims

1. A positive electrode active material for a non-aqueous electrolyte secondary battery, comprising:
a lithium-containing composite oxide having a layered rock salt structure; and
a sulfonic acid compound present on a surface of the lithium-containing composite oxide, wherein
the lithium-containing composite oxide contains 80 mol% or more of Ni, 1.5 mol% or more of Co, and 4 mol% or more of Al, relative to a total number of moles of metal elements other than Li, and
the sulfonic acid compound is represented by general formula I: 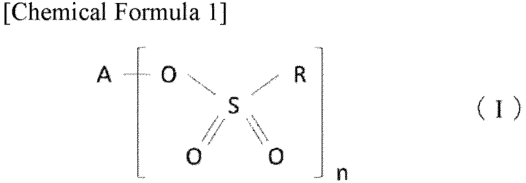 (where A is a Group 1 element or a Group 2 element, R is a hydrocarbon group, and n is 1 or 2).

2. The positive electrode active material for a non-aqueous electrolyte secondary battery according to claim 1, wherein the A is a Group 1 element.

3. The positive electrode active material for a non-aqueous electrolyte secondary battery according to claim 1, wherein the A is Li.

4. The positive electrode active material for a non-aqueous electrolyte secondary battery according to any one of claims 1 to 3, wherein the R is an alkyl group.

5. The positive electrode active material for a non-aqueous electrolyte secondary battery according to any one of claims 1 to 3, wherein the R is a methyl group.

6. The positive electrode active material for a non-aqueous electrolyte secondary battery according to any one of claims 1 to 5, wherein an amount of the sulfonic acid compound present on the surface of the lithium-containing composite oxide is 0.1% by mass to 1% by mass relative to a mass of the lithium-containing composite oxide.

7. The positive electrode active material for a non-aqueous electrolyte secondary battery according to any one of claims 1 to 6, having an absorption peak at at least one of locations near 1238 cm⁻¹, 1175 cm⁻¹, 1065 cm⁻¹, and 785 cm⁻¹ in an infrared absorption spectrum.

8. The positive electrode active material for a non-aqueous electrolyte secondary battery according to any one of claims 1 to 7, wherein an average particle size of the sulfonic acid compound is 10 µm or less.

9. The positive electrode active material for a non-aqueous electrolyte secondary battery according to any one of claims 1 to 8, wherein
in titrating a filtrate of an aqueous dispersion prepared by dispersing 1 g of the positive electrode active material for a non-aqueous electrolyte secondary battery in 70 ml of pure water with hydrochloric acid, assuming that an amount of acid consumption up to a first inflection point in a pH curve is X mol/g and an amount of acid consumption up to a second inflection point is Ymol/g, a value of Y-X is 130 µmol/g or less, and a value of X-(Y-X) is 130 µmol/g or less.

10. A method for manufacturing a positive electrode active material for non-aqueous electrolyte secondary battery, the method comprising:
a synthesis process of mixing a metal oxide containing 80 mol% or more of Ni, 1.5 mol% of Co, and 4 mol% or more of Al, with an Li compound and calcining a mixture to obtain a lithium-containing composite oxide;
a washing process of washing, with water, and dehydrating the lithium-containing composite oxide to obtain a cake-like composition;
a drying process of drying the cake-like composition to obtain a powdery composition; and
an adding process of adding at least one of a sulfonic acid compound and a sulfonic acid solution to the cake-like composition or the powdery composition.

11. A positive electrode for non-aqueous electrolyte secondary battery, comprising the positive electrode active material for non-aqueous electrolyte secondary battery according to any one of claims 1 to 9.

12. A non-aqueous electrolyte secondary battery, comprising the positive electrode for non-aqueous electrolyte secondary battery according to claim 11, a negative electrode, and a non-aqueous electrolyte.
